# EUROPÄISCHE PATENTSCHRIFT

(11) **EP 2 199 791 B1**
(45) Veröffentlichungstag und Bekanntmachung des Hinweises auf die Patenterteilung: **01.05.2019**
(21) Anmeldenummer: 08022111.2
(22) Anmeldetag: 19.12.2008
(51) Int. Cl.: G01N 33/49, G01N 33/72, G01N 21/31

(54) **Verfahren zum Bestimmen der Hämolyse einer Blutprobe sowie Vorrichtung**
Method for calculating the haemolysis of a blood sample and device
Méthode pour evaluer l'hémolyse dans les érythrocytes et dispositif associé

(43) Veröffentlichungstag der Anmeldung: 23.06.2010
(73) Patentinhaber: F. Hoffmann-La Roche AG, 4070 Basel (CH); Roche Diagnostics GmbH, 68305 Mannheim (DE)
(72) Erfinder: Schlaminger, Michael, 8010 Graz (AT)
(74) Vertreter: Bittner, Thomas L.

(56) Entgegenhaltungen:
- EP-A- 0 268 025
- EP-A- 0 535 618
- EP-A- 0 695 805
- DE-B- 1 295 888
- US-A- 4 813 420
- US-A1- 2005 051 466
- US-A1- 2008 297 769
- US-B1- 6 268 167
- PAZDZIOR GRZEGORZ ET AL: "The kinetics of haemolysis of spherocytic erythrocytes." CELLULAR & MOLECULAR BIOLOGY LETTERS, [Online] Bd. 8, Nr. 3, 2003, Seiten 639-648, XP002525467 ISSN: 1425-8153 Gefunden im Internet: URL:http://www.cmbl.org.pl/pdf/Vol8_p639.p df> [gefunden am 2009-04-24]
- NEUDEL F ET AL: "Effect of hemolysis on oxygen and hematocrit measurements by near infrared reflectance spectroscopy" MEDICAL ENGINEERING & PHYSICS ELSEVIER UK, [Online] Bd. 24, Nr. 4, Mai 2002 (2002-05), Seiten 301-307, XP002525468 ISSN: 1350-4533 Gefunden im Internet: URL:http://www.sciencedirect.com/science?_ ob=ArticleURL&_udi=B6T9K-458N9JV-1&_user=9 87766&_rdoc=1&_fmt=&_orig=search&_sort=d&v iew=c&_acct=C000049880&_version=1&_urlVers ion=0&_userid=987766&md5=222ebcf0cb6ce5ab7 40d4a339a06fbba> [gefunden am 2009-04-24]

## Beschreibung

Die Erfindung betrifft Techniken zum Bestimmen der Hämolyse einer Blutprobe.

### Hintergrund der Erfindung

Zur Blutprobenbestimmung werden sogenannte Oxymeter verwendet. Hierbei handelt es sich um optische Messeinrichtungen, mit denen Totalhämoglobin (tHb), Hämoglobinderivate wie Oxyhämoglobin (O2Hb), Carboxyhämoglobin (COHb), Methämoglobin (MetHb) sowie das Abbauprodukt Bilirubin bestimmt werden. Diese Parameter werden photometrisch auf Basis des Lambert-Beerschen Gesetzes bestimmt. Hierzu wird üblicherweise die additive Absorption der Einzelkomponenten bei mehreren diskreten Wellenlängen im sichtbaren Bereich gemessen, beispielsweise zwischen 459nm und 666nm. Die ermittelten Messwerte bilden ein überbestimmtes lineares Gleichungssystem, welches mittels mehrfacher linearer Regression zum Bestimmen der jeweiligen Konzentrationen gelöst werden kann.

Die Messung der Hämoglobinderivate erfolgt im Hämolysat, also einer hämolysierten Blutprobe. Dieses bedeutet, dass alle streuenden korpuskularen Blutbestandteile wie Erythrozyten und dergleichen vor der optischen Messwerterfassung möglichst vollständig zerstört, das heißt hämolysiert, sind. Die Hämolyse der Blutzellen erfolgt typischerweise, indem Ultraschall auf die Blutprobe eingekoppelt wird. Aufgrund des so homogenisierten Mediums kann dann zur eigentlichen Konzentrationsbestimmung der Bestandteile das Lambert-Bccrsche Gesetz herangezogen werden, welches die konstante Abschwächung von in die zu untersuchende Blutprobe eingestrahltem Licht entlang des Weges durch die Blutprobe beschreibt.

Im nicht hämolysierten Zustand stellt Blut in optischer Hinsicht ein trübes, "farbiges", partikelhaltiges Medium dar. Einfallendes Licht wird wellenlängenabhängig abgeschwächt und gestreut. Die Streuung des Lichtes erfolgt in erster Linie an den im Blut befindlichen Zellen. Die hohe Absorption des kurzwelligen blauen Lichtes und die relativ geringe Absorption des roten / infraroten Lichtes durch das Blut rufen die charakteristische rote Farbe des Blutes hervor. Die verschiedenen Blutbestandteile beeinflussen die Lichtabsorption in charakteristischen Wellenlängenbereichen. Das im Blut enthaltene Wasser dämpft infrarotes Licht oberhalb von 1000nm sehr stark, während Eiweiße und Hämoglobin bevorzugt im grünen und blauen Spektralbereich absorbieren.

Im nicht hämolysierten Vollblut findet neben der Absorption eine Streuung und Beugung des einfallenden Lichtes an den darin enthaltenen Partikeln (vor allem an den zellulären Blutbestandteilen) statt. Aufgrund der Komplexität des Streuvorganges, bedingt vor allem durch die formbedingte hohe Anisotropie sowie den bikonkaven Querschnitt und die Varianz der Form der Erythrozyten, gibt es keinen analytisch einfach darstellbaren Zusammenhang zwischen der Konzentration der im Blut gelösten Stoffe und der detektierten Lichtschwächung. Um reproduzierbare und aussagefähige optische Messungen ausführen zu können, wird daher das Blut hämolysiert.

Ist das Blut vollständig hämolysiert und sind darüber hinaus alle streuenden Zellfragmente entfernt, wird bei der photometrischen Untersuchung auf die Blutprobe einfallendes Licht durch die darin enthaltenden Bestandteile idealerweise ausschließlich absorbiert. Für die Konzentrationsbestimmung der Blutbestandteile kann dann das Lambert-Beersche Gesetz herangezogen werden.

Die Hämolyse ist somit eine wesentliche Voraussetzung für eine anschließende photometrische Untersuchung von Blutproben. Es besteht deshalb Bedarf für Techniken zur Bestimmung der Hämolyse selbst, insbesondere um für eine anschließende Untersuchung der hämolysierten Blutprobe definierte Ausgangsbedingungen zu schaffen und somit die Genauigkeit und Reproduzierbarkeit analytischer Untersuchungen zu verbessern.

Aus dem Dokument Pazdzior et al. ("The kineticsof haemolyses of spherocytic erythrocytes." CELLULAR & MOLECULAR BIOLOGY LETTERS, Bd. 8, Nr. 3, 2003, Seiten 639-648) ist ein Verfahren zum Untersuchen des Hämolyseverlaufes bekannt, bei dem zeitabhängig die Transmission von Messlicht durch Hämolyseproben hindurch gemessen wird. Der gemessene Zeitverlauf wird mit Hilfe mehrerer additiver Exponentialfunktionen simuliert.

Das Dokument DE 1 295 888 A betrifft ein Verfahren zur Resistenzbestimmung von roten Blutkörperchen. Die Blutkörperchen werden zunächst in einer isotonischen Salzlösung suspendiert. Anschließend wird die Salzkonzentration des Suspensionsmediums verringert und der sich mit der Konzentrationsänderung ändernde Hämolysegrad beobachtet. Mittels einer Lichtquelle und einer optischen Beobachtungseinrichtung wird ein Maß für die Hämolyse und für die Hämolysegeschwindigkeit bestimmt.

In dem Dokument US 2008/0297769 A1 sind eine Vorrichtung und ein Verfahren zum Bestimmen von Eigenschaften einer Flüssigkeitsprobe offenbart, beispielsweise der Hämolysegrad einer Blutprobe. Die Intensität von durch die Blutprobe transmittiertem Licht wird detektiert und ein Spektrum für verschiedene Wellenlängen bestimmt. Das Spektrum wird mit Intensitäten verglichen, die zu verschiedenen Wellenlängen berechnet wurden.

### Zusammenfassung der Erfindung

Aufgabe der Erfindung ist es, verbesserte Techniken zur Bestimmung der Hämolyse einer Blutprobe anzugeben, mit denen der Hämolysezustand der Blutprobe näher bestimmt werden kann.

Diese Aufgabe wird erfindungsgemäß durch ein Verfahren zum Bestimmen der Hämolyse einer Blutprobe nach dem unabhängigen Anspruch 1 sowie eine Vorrichtung zum Bestimmen der Hämolyse einer Blutprobe nach dem unabhängigen Anspruch 8 gelöst.

Weiterhin ist ein Hämolysator nach dem unabhängigen Anspruch 9 vorgesehen. Vorteilhafte Ausgestaltungen der Erfindung sind Gegenstand von abhängigen Unteransprüchen.

Nach der Erfindung ist ein Verfahren zum Bestimmen der Hämolyse einer Blutprobe, bei dem der Fortschritt der Hämolyse ermittelt wird, wobei das Verfahren die folgenden Schritte aufweist:
- Einstrahlen von Messlicht, welches von einer Messlichtquelle abgegeben wird, auf die Blutprobe beim Hämolysieren,
- Erfassen von Messlichtwerten zu mehreren Messzeitpunkten für durch die Blutprobe hindurch transmittiertes und / oder von der Blutprobe reflektiertes Messlicht mit einer Detektoreinrichtung,
- Vergleichen mehrerer der Messlichtwerte für verschiedene Messzeitpunkte und Ermitteln eines Maßes für den Hämolysefortschritt mit einer Auswerteeinrichtung, indem aus den erfassten Messlichtwerten ein zeitabhängiger Verlauf für die Messlichtwerte gebildet wird und für den zeitabhängigen Verlauf zumindest abschnittsweise ein Anstieg einer zugeordneten Messkurve als Vergleichsmaß für den Vergleich der Messlichtwerte zu den verschiedenen Messzeitpunkten ermittelt wird, und
- Feststellen des Abschlusses der Hämolyse, wenn der Anstieg im Rahmen einer wählbaren Messgenauigkeit nach einem Messzeitraum, in welchem der Anstieg von Null verschieden ist, auf ein Minimum bis hin zu Null abfällt.

Der Anstieg kann für einzelne Punkte im Kurvenverlauf oder auch für durch mehrere Punkte der Kurve verlaufende Kurvenabschnitte bestimmt werden. Es können positive und negative Anstiegswerte auftreten, die einen steigenden und einen fallenden Kurvenverlauf anzeigen.

In der nicht hämolysierten Blutprobe findet für das eingestrahlte Messlicht neben der Absorption Streuung und Beugung an den eingebetteten Partikeln statt. Ist das Blut hingegen vollständig hämolysiert und sind alle streuenden Zellfragmente entfernt, wird das einfallende Messlicht im Idealfall ausschließlich absorbiert. Der Übergang zwischen dem Zustand kombinierter Absorption, Streuung und Beugung zur reinen Absorption ist im zeitlichen Messkurvenverlauf als ein Übergang zwischen einem von Null verschiedenen Anstieg und abnehmenden Anstiegen der Messkurve erkennbar, die bis hin zu einem Anstieg von Null gehen. Wenn sich der Anstieg im zeitlichen Verlauf nicht mehr ändert, so zeigt dieses an, dass der Hämolysevorgang, soweit es die aktuelle Hämolyse betrifft, abgeschlossen ist.

Ein Soll-Absorptionsspektrum kann auf verschiedene Art und Weise theoretisch oder experimentell gewonnen werden, was unten näher erläutert wird. Es entspricht einem Absorptionsspektrum für einen bekannten Hämolysegrad, vorzugsweise für eine vollständig hämolysierte Blutprobe. Das wenigstens eine Mess-Absorptionsspektrum wird dann für die Bestimmung der Hämolyse der zu untersuchenden Blutprobe gemessen, um es mit dem wenigstens einen Soll-Absorptionsspektrum zu vergleichen.

Die Vorrichtung kann in Kombination in einem Hämolysator vorgesehen sein.

Mit der Erfindung sind verbesserte Techniken zur Verfügung gestellt, die eine zuverlässige Bestimmung der Hämolyse einer Blutprobe ermöglichen. Die Hämolyse der Blutprobe selbst kann hierbei auf beliebige Art und Weise unter Verwendung einzelner oder mehrerer Hämolyseverfahren ausgeführt werden, die in verschiedenen Ausgestaltungen als solche bekannt sind. So kann vorgesehen sein, die in einer Messkammer befindliche Blutprobe zum Hämolysieren mit Ultraschall zu beaufschlagen. Ergänzend oder alternativ kann die Hämolyse der Blutprobe mittels Zugabe eines oder mehrerer chemischer Reagenzien oder durch Erniedrigung des osmotischen Wertes der Blutprobe bewirkt werden.

In Verbindung mit der Hämolysefortschrittsbestimmung kann das Erfassen der Messlichtwerte für das durch die Blutprobe hindurch transmittierte und / oder von der Blutprobe reflektierte Messlicht kontinuierlich oder diskontinuierlich erfolgen. Es ist bei der Hämolysefortschrittsbestimmung in einer bevorzugten Ausgestaltung keine spektral aufgelöste Messung vorgesehen, so dass die Messlichtwerte frei von einer spektralen Zuordnung erfasst werden.

Alternativ kann aber auch eine wellenlängenselektive Erfassung der Messlichtwerte erfolgen, was insbesondere dadurch erreicht werden kann, dass einfarbiges Licht für mehrere Wellenlängen getrennt eingestrahlt und detektiert wird.

Die Ermittlung des Maßes für den Hämolysegrad der Blutprobe erfolgt bevorzugt spektral aufgelöst, was bedeutet, dass Soll-Absorptionswerte aus dem wenigstens einen Soll-Absorptionsspektrum und Mess-Absorptionswerte aus dem wenigstens einen Mess-Absorptionsspektrum ihrer jeweiligen spektralen Zuordnung entsprechend verglichen werden. Es können beispielsweise der gleichen Wellenlänge zugeordnete Messwerte miteinander verglichen werden.

Die Bestimmung des Hämolysefortschritts und die Bestimmung des Maßes für den Hämolysegrad der Blutprobe tragen jeweils zur verbesserten Effizienz und optimierten Reproduzierbarkeit bei der Blutprobenbestimmung bei. Bei ihrer möglichen Kombination ergeben sich Zusatzeffekte. So kann beispielsweise vorgesehen sein, zunächst den Forschritt einer Hämolyse zu beobachten, um anschließend aus der Bestimmung des Maßes für den Hämolysegrad zu ermitteln, ob eine ausreichende Hämolyse vorliegt. Falls dieses nicht gegeben ist, kann eine Nach-Hämolyse durchgeführt werden, für die dann wieder der Verlauf anhand des Hämolysefortschritts beobachtet wird. Hierdurch ergibt sich eine Zusatzinformation, so dass mit größerer Sicherheit festgestellt werden kann, ob und in welchem Umfang die Nach-Hämolysc zur Verbesserung der hämolysierten Blutprobe beiträgt. Umgekehrt kann die Bestimmung des Maßes für den Hämolysegrad parallel zur Hämolysefortsehrittsbestimmung genutzt werden, um zusätzliche Informationen über den Grad der aktuell ablaufenden Hämolyse zu gewinnen. In kombinierter Form potenzieren somit die Bestimmung des Hämolysefortschritts sowie die Bestimmung des Maßes für den Hämolysegrad die mit der Erfindung erreichten Verbesserungen bei der Hämolysebestimmung einer Blutprobe.

Bevorzugt sieht eine Fortbildung der Erfindung vor, dass das Erfassen der Messlichtwerte wenigstens teilweise während eines Hämolysebetriebs einer zur Hämolyse der Blutprobe genutzten Hämolysevorrichtung ausgeführt wird. Im Hämolysebetrieb wirkt die auch als Hämolysator bezeichnete Hämolysevorrichtung tatsächlich auf die Blutprobe ein, um zum hämolysieren. Dieses erfolgt beispielsweise mittels Beaufschlagen der Blutprobe mit Ultraschall.

Bei einer vorteilhaften Ausgestaltung der Erfindung kann vorgesehen sein, dass das Erfassen der Messlichtwerte wenigstens teilweise während einer Betriebspause der zur Hämolyse der Blutprobe genutzten Hämolysevorrichtung ausgeführt wird. Während der Betriebspause erfolgt keine die Hämolyse fördernde Einwirkung der Hämolysevorrichtung auf die Blutprobe. Beispielsweise ist die Ultraschallbeaufschlagung unterbrochen. Auch eine kombinierte Erfassung der Messlichtwerte während des Hämolysebetriebs einerseits und der Betriebspausen andererseits kann vorgesehen sein. In Abhängigkeit vom beobachteten Fortschritt der Hämolyse können nachfolgende Verfahrensschritte gewählt werden. Wird beispielsweise festgestellt, dass ein weiterer Hämolysefortschritt nicht beobachtet werden kann, besteht die Möglichkeit, die hämolysierte Probe nun einer weiteren Bestimmung zuzuführen, beispielsweise der photometrischen Bestimmung der Hämoglobinderivate. Auch kann sich eine Bestimmung der Hämolysegrads anschließen, um dann zu entscheiden, ob eine Nach-Hämolyse durchgeführt werden soll, die ihrerseits im Fortschrittsverlauf beobachtet werden kann.

Eine Weiterbildung der Erfindung kann vorsehen, dass das Erfassen der Messlichtwerte wenigstens teilweise während der Einwirkung eines oder mehrerer die Hämolyse der Blutprobe fördernder Reagenzien ausgeführt wird. Es kann auch vorgesehen sein, die Hämolyse sowohl mittels eines oder mehrere Reagenzien als auch mittels Ultraschallbeaufschlagung durchzuführen. Als Reagenzien können hämolytisch wirkende Tenside eingesetzt werden wie Triton X-100 in verdünnter Form, TWEEN 621 sowie BRIJ 56 (verfügbar von der Firma Sigma Aldrich).

Eine bevorzugte Weiterbildung der Erfindung sieht vor, dass das Erfassen der Messlichtwerte wenigstens teilweise während eines Zeitraumes ausgeführt wird, in dem die Blutprobe frei von der Einwirkung eines oder mehrerer die Hämolyse der Blutprobe fördernder Reagenzien ist. Die Blutprobe ist frei von der Einwirkung des einen oder der mehreren Reagenzien, wenn deren hämolysierende Wirkung aufgebraucht oder gehemmt ist. Nach einer Messung können wahlweise weitere Reagenzien zugesetzt werden, insbesondere für eine Nach-Hämolyse.

Eine bevorzugte Weiterbildung der Erfindung sieht vor, dass als Messlichtwerte Intensitätsmesswerte für das Messlicht erfasst werden.

Eine zweckmäßige Ausgestaltung der Erfindung sieht vor, dass nach dem Feststellen des Abschlusses der Hämolyse Hämoglobinwerte der Blutprobe mittels eines optischen Messverfahrens bestimmt werden. Derartige optische Verfahren sind als solche in verschiedenen Ausführungsformen bekannt. Hierbei können teilweise die optischen Messkomponenten verwendet werden, zum Beispiel die Messlichtquelle und/oder die Detektoreinrichtung, die zur Bestimmung des Hämolysefortschritts genutzt werden.

Nachfolgend werden vorteilhafte Ausgestaltungen in Verbindung mit der Bestimmung des Maßes für den Hämolysegrad der Blutprobe näher erläutert. Es kann vorgesehen werden, dass bei dem Vergleich lokale Kurvenanstiegswerte für einander spektral zugeordnete Soll-Absorptionswerte aus dem wenigstens einen Soll-Absorptionsspektrum und Mess-Absorptionswerte aus dem wenigstens einen Mess-Absorptionsspektrum verglichen werden. Eine nicht vollständige Hämolyse führt im Vergleich zum Soll-Absorptionsspektrum, welches eine vollständig hämolysierte Blutprobe repräsentiert, zu spektralen Veränderungen in dem Mess-Absorptionsspektrum. Hierzu gehört zunächst eine Erhöhung des Absorptionsspektrums aufgrund des Anhebens von Absorptionsbanden um einen Hämolysegrad abhängigen Offset. Darüber hinaus zeigen sich Unterschiede in der Flankensteilheit in Bereichen geringerer Absorption. Des Weiteren ist das Signal-Rausch-Verhältnis bei höheren Hämolysegraden verbessert, weshalb das Pixel-Pixel-Rauschen sensitiv für die Hämolysequalität ist. Diese Indikatoren können einzeln oder in Kombination herangezogen werden, um ein Maß für den Hämolysegrad zu bestimmen. Die lokalen Kurvenanstiegswerte zeigen insbesondere die Unterschiede in der Flankensteilheit an. Auch das Rauschverhalten wird hierdurch indiziert. Die aus dem Vergleich ermittelten Werte können wahlweise weiterverarbeitet werden, wozu insbesondere eine Mittelwert- oder Summenbildung oder auch eine Wichtung der Vergleichswerte gehören.

Bevorzugt sieht ein Beispiel vor, dass bei dem Vergleich die einander spektral zugeordneten Soll-Absorptionswerte aus dem wenigstens einen Soll-Absorptionsspektrum und Mess-Absorptionswerte aus dem wenigstens einen Mess-Absorptionsspektrum verglichen werden. Der Vergleich einander spektral zugeordneter Absorptionswerte kann insbesondere als eine Subtraktionsbildung ausgeführt werden, so dass so genannte Residuen bestimmt werden. Diese stehen in Beziehung zu der in Abhängigkeit vom Hämolysegrad mehr oder weniger ausgebildeten und vorangehend beschriebenen Offset-Anhebung. Auch im Zusammenhang mit diesen Vergleichswerten kann wahlweise eine Weiterverarbeitung vorgesehen sein.

Es kann vorgesehen sein, dass für das wenigstens eine Soll-Absorptionsspektrum ein mittels Absorptionsbandensummierung gebildetes Modell-Absorptionsspektrum verwendet wird. Ein solches Soll-Absorptionsspektrum wird gebildet, indem für die erwarteten Bestandteile der jeweils bekannten Absorptionsbanden in dem interessierenden spektralen Bereich aufsummiert werden, so dass ein Gesamtabsorptionsspektrum entsteht. Üblicherweise werden die Absorptionsbanden in linearer Art und Weise addiert.

Es kann vorgesehen sein, dass für das wenigstens eine Soll-Absorptionsspektrum ein gemessenes Kalibricrungs-Absorptionsspektrum verwendet wird. Das gemessene Kalibrierungs-Absorptionsspektrum kann experimentell für eine mit Sicherheit hämolysierte Blutprobe experimentell ermittelt werden. Auch kann in einer Ausgestaltung vorgesehen sein, dass sowohl das Modell-Absorptionsspektrum als auch das gemessene Kalibrierungs-Absorptionsspektrum für die Bestimmung des Maßes des Hämolysegrades herangezogen werden.

Eine bevorzugte Weiterbildung der Erfindung sieht vor, dass mit dem Informationssignal ein Qualitätskontrollmaß für eine Probenqualität der Blutprobe angezeigt wird. Insbesondere im klinischen Umfeld kann die Bestimmung des Maßes für den Hämolysegrad einer Blutprobe auch dafür genutzt werden, die immer noch oder nicht mehr bestehende Qualität einer Blutprobe zu bestimmen. Je nach Anwendungszweck kann das Qualitätskontrollmaß bei Überschreitung oder Unterschreitung eines vorgegebenen Schwellwertmaßcs anzeigen, dass eine untersuchte Blutprobe noch oder nicht mehr brauchbar ist, beispielsweise aufgrund einer zu weit fortgeschrittenen Alterung.

Bei einer zweckmäßigen Ausgestaltung der Erfindung kann vorgesehen sein, dass eine Nach-Hämolyse der Blutprobe gestartet wird, wenn das Maß für den Hämolysegrad ein vorgegebenes Schwellwertmaß unterschreitet. Unabhängig davon, ob eine Nach-Hämolyse ausgeführt wird oder nicht, kann vorgesehen sein, mit der Ausgabeeinrichtung ein Signal zu erzeugen, welches ein Anzeigen des Errcichens eines vorgegebenen Schwellwert-Hämolysegradcs bewirkt. Eine solche Signalisierung kann in akustischer und / oder visueller Form erfolgen. Beispielsweise kann eine entsprechende Anzeige den Benutzer hierauf hinweisen. Wird das Schwellwertmaß hingegen unterschritten, kann auch dieses dem Benutzer mitgeteilt werden. Die Auswertecinrichtung kann in diesem Fall automatisch ein Steuersignal erzeugen, welches an den zur Hämolyse genutzten Hämolysator gegeben wird, um eine Nach-Hämolyse zu initiieren, indem beispielsweise die Blutprobe erneut mit Ultraschall beaufschlagt wird. Anschließend wird das Maß für den Hämolysegrad nochmals bestimmt, um dann wiederum zu entscheiden, ob die Hämolyse ausreichend durchgeführt wurde. Auf diese Weise ist eine automatische Regelschleife implementiert, bei der in Abhängigkeit vom Maß für den Hämolysegrad der Betrieb des Hämolysators gesteuert wird.

Bei einer Fortbildung der Bestimmung des Maßes für den Hämolysegrad der Blutprobe kann vorgesehen sein, dass ein Hämolysefortschritt bestimmt wird, indem von der Messlichtquelle abgegebenes Messlicht beim Hämolysieren auf die Blutprobe eingestrahlt wird, mit einer Detektorcinrichtung für durch die Blutprobe hindurch transmittiertes und / oder von der Blutprobe reflektiertes Messlicht zu mehreren Messzeitpunkten Messlichtwerte erfasst werden und mit der Auswerteeinrichtung mehrere der Messlichtwerte für verschiedene Messzeitpunkte verglichen werden und hieraus ein Maß für den Hämolysefortschritt ermittelt wird. Die Bestimmung des Maßes des Hämolysegrades der Blutprobe kann zeitlich parallel zur Hämolysefortschrittsbestimmung durchgeführt werden. Aber auch eine Nutzung im Anschluss an die Forschrittsbestimmung kann vorgesehen sein. Auf diese Weise ist beispielsweise eine zusätzliche Endkontrolle ermöglicht. In einer anderen Ausgestaltung wird das Maß für den Hämolysegrad in Betriebspausen der Hämolysevorrichtung als eine Art Zwischeninformation über die Hämolyse genutzt. Ergänzend kann die Bestimmung der Hämoglobinwerte der Blutprobe mittels eines optischen Messverfahrens vorgesehen sein.

In Verbindung mit vorteilhaften Ausgestaltungen der Vorrichtung zum Bestimmen der Hämolyse einer Blutprobe gelten die im Zusammenhang mit den Verfahren zur Bestimmung der Hämolyse gemachten Erläuterungen entsprechend. Die Vorrichtung zum Bestimmen der Hämolyse kann den verschiedenen Verfahrensgcstaltungen entsprechend konfiguriert werden.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung einer Vorrichtung zum Bestimmen der Hämolyse einer Blutprobe,
- Fig. 2: eine grafische Darstellung für gemessene Intensitäten I (in relativen Einheiten) von transmittiertem Messlicht in Abhängigkeit von der Zeit t (in ms) für zwei unterschiedliche Blutproben,
- Fig. 3: eine grafische Darstellung eines Kurvenverlaufs der Intensität I (in relativen Einheiten) von transmittiertem Messlicht (oben) sowie die den Kurvenanstieg charakterisierende erste Ableitung S (in relativen Einheiten) hiervon (unten), jeweils in Abhängigkeit von der Zeit t (in ms), wobei die Hämolyse als "in Ordnung" eingestuft wurde,
- Fig. 4: eine grafische Darstellung eines der Intensität I (in relativen Einheiten) von transmittiertem Messlicht (oben) sowie die den Kurvenanstieg charakterisierende erste Ableitung S (in relativen Einheiten) hiervon (unten), jeweils in Abhängigkeit von der Zeit t (in ms), wobei die Hämolyse als "grenzwertig" eingestuft wurde,
- Fig. 5: eine grafische Darstellung eines Kurvenverlaufs der Intensität I (in relativen Einheiten) von transmittiertem Messlicht (oben) sowie die den Kurvenanstieg charakterisierende erste Ableitung S (in relativen Einheiten) hiervon (unten), jeweils in Abhängigkeit von der Zeit t (in ms), wobei die Hämolyse als "nicht in Ordnung" eingestuft wurde,
- Fig. 6: eine grafische Darstellung der Absorption A (in mmol cm⁻¹ L⁻¹) in Abhängigkeit von der Wellenlänge λ (in nm) für die individuellen Absorptionsbanden von Hämoglobinderivaten sowie dem Abbauprodukt Bilirubin,
- Fig. 7: eine grafische Darstellung der jeweiligen Absorption A (in relativen Einheiten) für mehrere Mess-Absorptionsspektren in Abhängigkeit von der Wellenlänge λ (in nm) einer Blutprobe für verschiedene Hämolysegrade,
- Fig. 8: eine grafische Darstellung für die Zuordnung zwischen Hämolysegrad H (in %) und dem ermittelten Kurvenanstieg s (in relativen Einheiten) in Mess-Absorptionsspektren für mehrere Blutproben und
- Fig. 9: eine grafische Darstellung für die Zuordnung zwischen Hämolysegrad H (in %) und so genante Residuen r (in relativen Einheiten) in Mess-Absorptionsspektren für mehrere Blutproben.

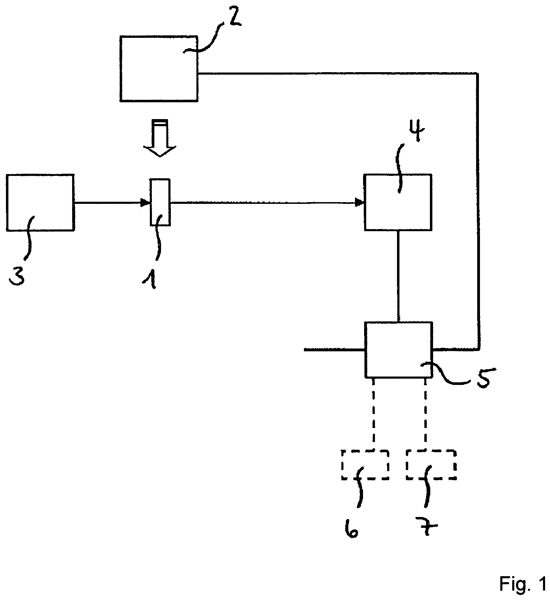

Fig. 1 zeigt eine schematische Darstellung einer Vorrichtung zum Bestimmen der Hämolyse einer Blutprobe. Zur Hämolyse wird die in einer Messkammer 1 befindliche Blutprobe in dem dargestellten Ausführungsbeispiel von einer Ultraschalleinrichtung 2 mit Ultraschall beaufschlagt. Von einer Lichtquelle 3, die Licht mit einem breitbandigen Spektrum oder einfarbiges Licht verschiedener Wellenlängen abgeben kann, wird Messlicht auf die Messkammer 1 gegeben. Durch die Blutprobe hindurch transmittiertes Messlicht gelangt dann auf einen Detektor. Mithilfe des Detektors 4 werden für das transmittierte Messlicht Intensitätsmesswerte erfasst, wahlweise in spektral aufgelöster Form. Der Detektor 4 ist an eine Auswerteeinrichtung 5 angeschlossen, mittels der die erfassten Messlichtwerte zur Bestimmung einer Transmission und / oder Absorption ausgewertet werden können. Ergänzend oder alternativ kann ein Detektor (nicht dargestellt) vorgesehen sein, welcher konfiguriert ist, von der Blutprobe in der Messkammer 1 reflektiertes Licht zu messen zur Bestimmung des Hämolysefortschritts.

Gemäß Fig. 1 ist die Auswerteeinrichtung 5 darüber hinaus mit der Ultraschalleinrichtung 2 gekoppelt, so dass diese in Abhängigkeit von den Auswerteergebnissen gesteuert werden kann.

Mittels gestrichelter Linien ist in Fig. 1 eine optionale Ausgabeeinrichtung 6 gezeigt, über die Audio- und/oder Videosignale ausgegeben werden können, die Auswerteergebnisse anzeigen. Des weiteren ist eine Eingabeeinrichtung 7 vorgesehen, über welche Benutzereingaben erfasst werden.

Bei dem in Fig. 1 dargestellten Ausführungsbeispiel dient der Detektor 4 mit der Auswerteeinrichtung 5 zur Bestimmung des Hämolysefortschritts der Hämolyse der Blutprobe sowie zur Bestimmung eines Maßes für den Hämolysegrad der Blutprobe. Alternativ kann eine getrennte Ausbildung der beiden Messsysteme vorgesehen sein, so dass diese einzeln oder in Kombination in einen Hämolysator integriert werden können, beispielsweise als Einzelmodul oder integriertes Modul.

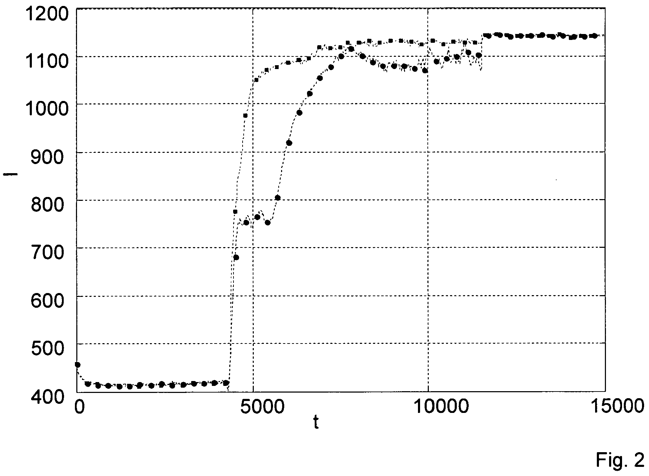

Fig. 2 zeigt grafische Darstellungen für die Messlichtintensität in Abhängigkeit von der Zeit. Zur Aufnahme dieses Kurvenverlaufes für den Fortschritt der Hämolyse einer zu bestimmenden Blutprobe dient der in Fig. 1 vorgesehene Intensitätsdetektor 5. Es ergibt sich, dass während eines Anfangszeitraumes I (0 bis etwa 4000ms) in den Kurvenverlauf die gemessene Lichtintensität im Wesentlichen unverändert bleibt. Die Hämolyse hat noch nicht begonnen. In einem weiteren Kurvenabschnitt II (etwa 4000 bis etwa 8000ms) steigt die Intensität des erfassten Messlichtes dann an, was den Beginn (bei 4000ms) und den weiteren Fortgang der Hämolyse anzeigt. Mit vorschreitender Hämolyse geht der Kurvenverlauf in einen Sättigungsabschnitt III (etwa 8000 bis etwa 12000ms) über, in welchem sich die transmittierte Messlichtintensität kaum noch ändert. Dieses zeigt die vollständige Hämolyse an.

Die mittels Quadraten dargestellte Messkurve stellt Wertepaare einer Blutprobe dar, bei welcher der Hämolyseverlauf und das Hämolyseergebnis in Ordnung war. Die mittels Kreisen dargestellte Messkurve zeigt Wertepaare einer Blutprobe, bei welcher der Hämolyseverlauf und das Hämolyseergebnis nicht in Ordnung war.

Der zeitabhängige Kurvenverlauf für die Intensität des transmittierten Messlichtes kann darüber hinaus dafür genutzt werden, zu prüfen, ob sich bei der Hämolyse Luftblasen bilden, die zu einem veränderten Kurvenverlauf führen. Luftblasen führen zu einer schlagartigen Erhöhung von transmittiertem Messlicht, da Absorption und Streuung entfallen. Darüber hinaus kann eine Fokussierung des Messlichtes durch die Luftblasen erfolgen. Es entsteht so eine nicht gewollte lokale Steigung in der Messkurve.

Anhand des Fortschrittsverlaufs der Hämolyse gemäß Fig. 2 kann dann beispielsweise entschieden werden, ob eine zunächst vorgesehene Hämolysezeit verlängert werden muss oder nicht. Auch kann entschieden werden, ob gegebenenfalls eine Wiederholung des Hämolyse-Vorganges durchgeführt wird.

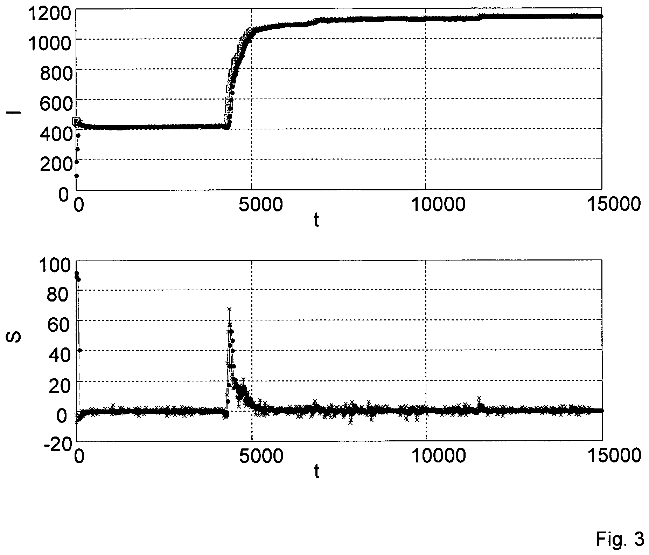

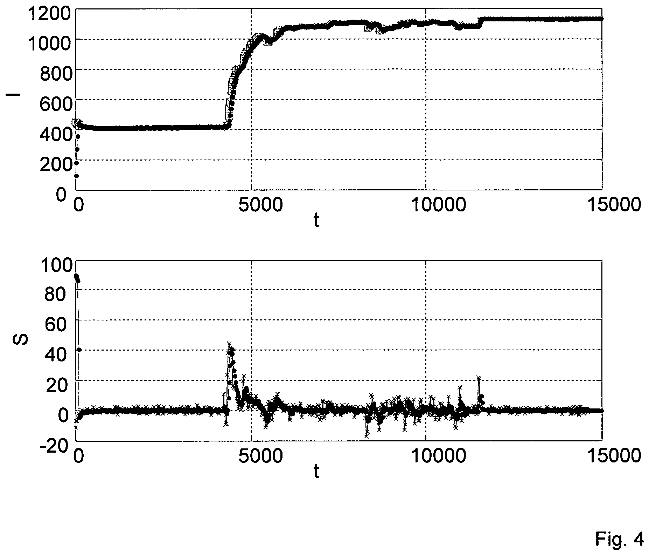

Fig. 3 zeigt eine grafische Darstellung eines Kurvenverlaufs für die zeitliche Abhängigkeit der Intensität von transmittiertem Messlicht sowie die den Kurvenanstieg charakterisierende erste Ableitung hiervon, wobei die Hämolyse als "in Ordnung" eingestuft wurde. Die Hämolyse führt zu einem starken Rauschen der erfassten Messdaten (Rohdaten - Kreuze in Fig. 3). Es kann eine Rauschuntcrdrückung mittels Filterung vorgesehen sein. Hierdurch wird die Messdatenerfassung vereinfacht. Diese gefilterten Daten werden in der Figur durch Kreise dargestellt. Eine Einstufung der Hämolyse wurde in Abhängigkeit von der zeitlichen Position eines letzten signifikanten Kurvenanstiegs vorgenommen. Dieser liegt vor, wenn der Kurvenanstieg oberhalb eines Schwellwertes liegt. Solche Messwerte sind in der oberen Teilfigur zusätzlich durch offene Quadrate dargestellt. Wenn der letzte signifikante Kurvenanstieg innerhalb eines gültigen Zeitfensters liegt, ist die Hämolyse "in Ordnung". Die Hämolyse wird als "grenzwertig eingestuft" (vgl. Fig. 4 unten), wenn der letzte signifikante Kurvenanstieg am Rand des Zeitfensters liegt. Die Hämolyse ist nicht "in Ordnung", wenn der letzte signifikante Kurvenanstieg außerhalb des Zeitfensters liegt.

Fig. 4 zeigt eine grafische Darstellung eines Kurvenverlaufs für die zeitliche Abhängigkeit der Intensität von transmittiertem Messlicht sowie die den Kurvenanstieg charakterisierende erste Ableitung hiervon, wobei die Hämolyse als "grenzwertig" eingestuft wurde.

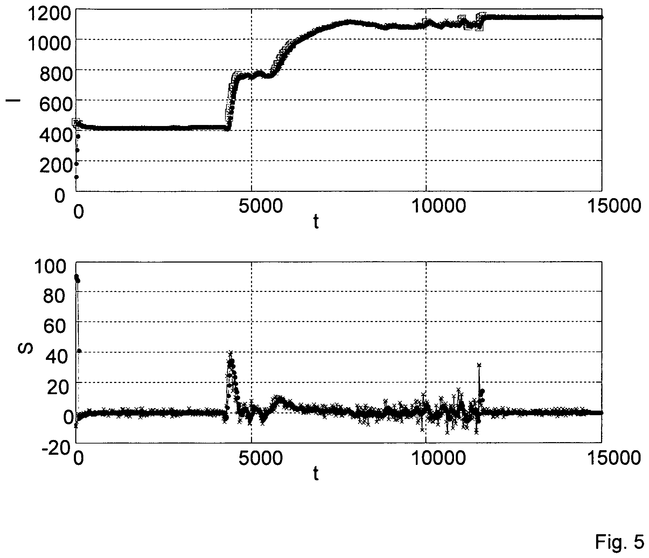

Fig. 5 zeigt eine grafische Darstellung eines Kurvenverlaufs für die zeitliche Abhängigkeit der Intensität von transmittiertem Messlicht sowie die den Kurvenanstieg charakterisierende erste Ableitung hiervon, wobei die Hämolyse als "nicht in Ordnung" eingestuft wurde.

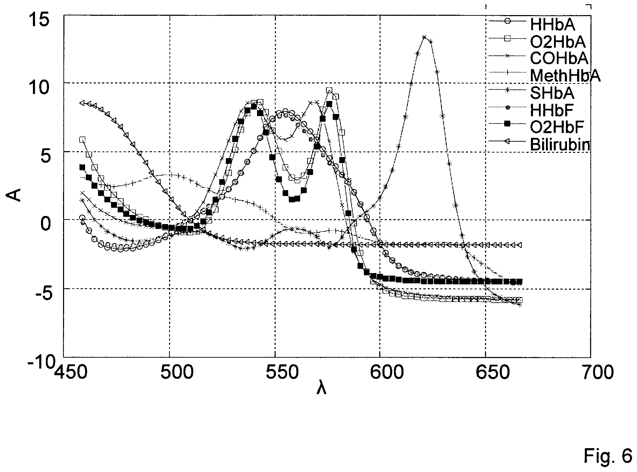

Fig. 6 zeigt eine grafische Darstellung der Absorption in Abhängigkeit von der Wellenlänge für die individuellen Absorptionsbanden von Hämoglobinderivaten sowie dem Abbauprodukt Bilirubin. Mittels Aufsummieren der Absorptionsbanden für die dargestellten Substanzen ergibt sich ein Modell-Absorptionsspektrum, welches bei der Bestimmung des Maßes für den Hämolysegrad mit gemessenen Mess-Absorptionsspektren für eine zu untersuchende Blutprobe verglichen wird. Das bei der Bestimmung des Maßes für den Hämolysegrad herangezogene Soll-Absorptionsspektrum kann alternativ gewonnen werden, indem eine Kalibrierungs-Blutprobe spektroskopisch untersucht wird, für die der Hämolysgrad zuverlässig bekannt ist. Ist beispielsweise die Hämolyse für die Kalibrierungs-Blutprobe vollständig durchgeführt, ergibt sich ein Kalibrierungs-Absorptionsspektrum für einen 100%-igen Hämolysegrad.

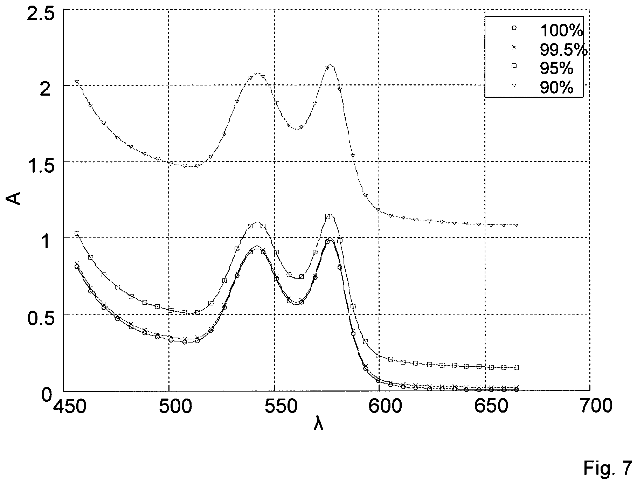

Fig. 7 zeigt eine grafische Darstellung für mehrere Absorptionsspektren einer Blutprobe für verschiedene Hämolysegrade, die oben rechts angegeben sind.

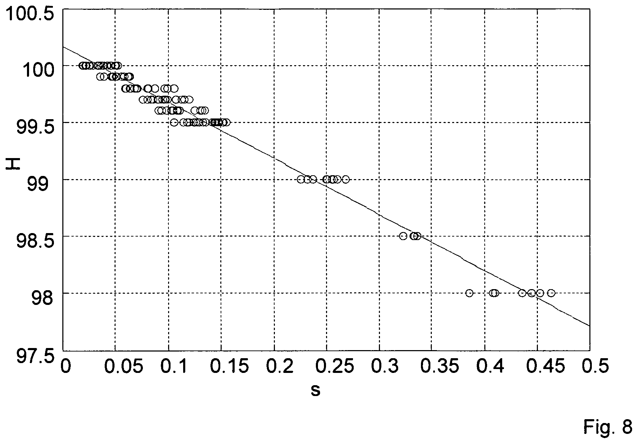

Fig. 8 zeigt eine grafische Darstellung für die Zuordnung zwischen Hämolysegrad und dem ermittelten Kurvenanstieg in Mess-Absorptionsspektren für mehrere Blutproben. Es ergibt sich, dass der Zusammenhang zwischen Hämolysegrad und Kurvenanstieg mittels einer Geradengleichung (lineare Fitgerade) beschrieben werden kann. Zum Vergleich wurden Proben mit einem fest eingestellten Hämolysegrad hergestellt, indem gezielt Mengen hämolysierten Blutes und nicht hämolysierten Blutes miteinander vermischt wurden. Als zusätzliche Kontrolle wurde ein Auszählen der Erythrozyten unter einem Mikroskop durchgeführt. Die in Fig. 8 dargestellten Werte für den Kurvenanstieg wurden ermittelt, indem für die Wellenlängen in dem untersuchten Bereich jeweils einander zugeordnete lokale Anstiege für eine Absorptionskurve einer Probe mit einem 100%-igen Hämolysegrad einerseits und einer Messkurve mit einem von 100% verschiedenen Hämolysegrad andererseits miteinander verglichen wurden und eine Mittelung für die hierbei festgestellten Unterschiede ausgeführt wurde.

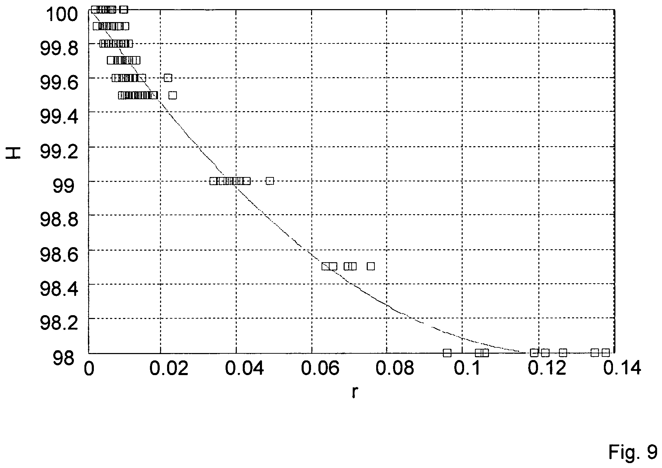

Fig. 9 zeigt eine grafische Darstellung für die Zuordnung zwischen Hämolysegrad und so genannte Residuen für mehrere Blutproben. Es ergibt sich ein quadratischer Zusammenhang zwischen dem Hämolysegrad und den Residuen (quadratische Fitfunktion). Die Residuen sind ein Maß für die Übereinstimmung der mittels Regression gefundenen Anpassungskurven mit den experimentell gemessenen Werten.

## Patentansprüche

1. Verfahren zum Bestimmen der Hämolyse einer Blutprobe, bei dem ein Maß für den Hämolysefortschritt ermittelt wird, wobei das Verfahren die folgenden Schritte aufweist:
- Einstrahlen von Messlicht, welches von einer Messlichtquelle (3) abgegeben wird, auf die Blutprobe beim Hämolysieren,
- Erfassen von Messlichtwerten zu mehreren Messzeitpunkten für durch die Blutprobe hindurch transmittiertes und / oder von der Blutprobe reflektiertes Messlicht mit einer Detektoreinrichtung (4), und
- Vergleichen mehrerer der Messlichtwerte für verschiedene Messzeitpunkte und Ermitteln eines Maßes für den Hämolysefortschritt, indem aus den erfassten Messlichtwerten ein zeitabhängiger Verlauf für die Messlichtwerte gebildet wird und für den zeitabhängigen Verlauf zumindest abschnittsweise ein Anstieg einer zugeordneten Messkurve als Vergleichsmaß für den Vergleich der Messlichtwerte zu den verschiedenen Messzeitpunkten ermittelt wird,
**gekennzeichnet durch**
- Ausführen des Vergleichs der Messlichtwerte und das Ermitteins eines Maßes für den Hämolysefortschritt mittels einer Auswerteeinrichtung (5) und
- Feststellen des Abschlusses der Hämolyse, wenn der Anstieg im Rahmen einer wählbaren Messgenauigkeit nach einem Messzeitraum, in welchem der Anstieg von Null verschieden ist, auf ein Minimum bis hin zu Null abfällt.

2. Verfahren nach Anspruch 1, **dadurch gekennzeichnet, dass** das Erfassen der Messlichtwerte wenigstens teilweise während des Hämolysebetriebs einer zur Hämolyse der Blutprobe genutzten Hämolysevorrichtung ausgeführt wird.

3. Verfahren nach Anspruch 1 oder 2, **dadurch gekennzeichnet, dass** das Erfassen der Messlichtwerte wenigstens teilweise während einer Betriebspause der zur Hämolyse der Blutprobe genutzten Hämolysevorrichtung ausgeführt wird.

4. Verfahren nach mindestens einem der vorangehenden Ansprüche, **dadurch gekennzeichnet, dass** das Erfassen der Messlichtwerte wenigstens teilweise während der Einwirkung eines oder mehrerer die Hämolyse der Blutprobe fördernder Reagenzien ausgeführt wird.

5. Verfahren nach mindestens einem der vorangehenden Ansprüche, **dadurch gekennzeichnet, dass** das Erfassen der Messlichtwerte wenigstens teilweise während eines Zeitraumes ausgeführt wird, in dem die Blutprobe frei von der Einwirkung eines oder mehrerer die Hämolyse der Blutprobe fördernder Reagenzien ist.

6. Verfahren nach mindestens einem der vorangehenden Ansprüche, **dadurch gekennzeichnet, dass** als Messlichtwerte Intensitätsmesswerte für das Messlicht erfasst werden.

7. Verfahren nach einem der vorangehenden Ansprüche, **dadurch gekennzeichnet, dass** nach dem Feststellen des Abschlusses der Hämolyse Hämoglobinwerte der Blutprobe mittels eines optischen Messverfahrens bestimmt werden.

8. Vorrichtung zum Bestimmen der Hämolyse einer Blutprobe, die konfiguriert ist, ein Maß für den Hämolysefortschritt zu ermitteln, mit:
- einer Messlichtquelle (3), die konfiguriert ist, beim Hämolysieren Messlicht auf die Blutprobe einzustrahlen, und
- einer Detektoreinrichtung (4), die konfiguriert ist, zu mehreren Messzeitpunkten Messlichtwerte für durch die Blutprobe hindurch transmittiertes und / oder von der Blutprobe reflektiertes Messlicht zu erfassen,
**gekennzeichnet durch** eine Auswerteeinrichtung (5), die konfiguriert ist,
- mehrere der Messlichtwerte für verschiedene Messzeitpunkte zu vergleichen und hieraus ein Maß für den Hämolysefortschritt zu ermitteln, indem aus den erfassten Messlichtwerten ein zeitabhängiger Verlauf für die Messlichtwerte gebildet wird und für den zeitabhängigen Verlauf zumindest abschnittsweise ein Anstieg einer zugeordneten Messkurve als Vergleichsmaß für den Vergleich der Messlichtwerte zu den verschiedenen Messzeitpunkten ermittelt wird, und
- einen Abschluss der Hämolyse festzustellen, wenn der Anstieg im Rahmen einer wählbaren Messgenauigkeit nach einem Messzeitraum, in welchem der Anstieg von Null verschieden ist, auf ein Minimum bis hin zu Null abfällt.

9. Hämolysator mit einer Vorrichtung nach Anspruch 8.

## Claims

1. A method of determining the haemolysis of a blood sample in which a measure for haemolysis progression is determined, wherein the method comprises the following steps:
- shining of measuring light which is emitted by a measuring light source (3) onto the blood sample during haemolysing,
- recording, with a detector device (4), at several measuring times of measuring light values for the measuring light reflected by the blood sample, and
- comparing several of the measuring light values for different measuring times and determining a measure for haemolysis progression, in that from the recorded measuring light values a time-dependent course for the measuring light values is formed and for the time time-dependent course at least in parts an increase in the measuring curve is determined as a comparative measure for comparing the measuring light values at the various measuring times,
**characterised by**
- carrying out the comparison of the measuring light values and the determination of a measure for haemolysis progression by means of an evaluation device (5) and
- determining the conclusion of haemolysis when the increase as part of a selectable measuring accuracy after a measuring period in which the increase from zero is different, falls from a minimum to zero.

2. The method according to claim 1, **characterised in that** the recording of the measuring light values is carried out at least partially during the haemolysis operation of a haemolysis device used for the haemolysis of the blood sample.

3. The method according to claim 1 or 2, **characterised in that** the recording of the measuring light values is carried out at least partially during an operating pause of a haemolysis device used for the haemolysis of the blood sample.

4. The method according to at least one of the preceding claims, **characterised in that** the recording of the measuring light values is carried out at least partially during the action of one or more the regents promoting the haemolysis of the blood sample.

5. The method according to at least one of the preceding claims, **characterised in that** the recording of the measuring light values is carried out at least partially during a period in which the blood sample is free of the action of one or more of the reagents promoting the haemolysis of the blood sample.

6. The method according to any one of the preceding claims, **characterised in that** as measuring light values intensity measuring values for the measuring light are recorded.

7. The method according to any one of the preceding claims, **characterised in that** after determining the conclusion of the haemolysis haemoglobin values of the blood sample are determined by means of an optical measuring method.

8. A device for determining the haemolysis of a blood sample which is configured to determine a measure for the progression of haemolysis, with:
- a measuring light source (3) which is configured to shine measuring light onto the blood sample during haemolysing, and
- a detector device (4) which is configured to record, at several measuring times, measuring light values for measuring light transmitted through the blood sample and/or reflected from the blood sample,
**characterised by** an evaluation device (5) which is configured
- to compare several of the measuring light values for different measuring times and to determine a measure for the progression of haemolysis therefrom in that from the recorded measuring light values a time-dependent course for the measuring light values is formed and for the time-dependent course at least in sections an increase in an assigned measuring curve is determined as a comparative measurement for comparing the measuring light values at the different measuring times, and
- to determine conclusion of the haemolysis when the increase as part of a selectable measuring accuracy after a measuring period in which the increase from zero is different, falls from a minimum to zero.

9. A haemolyser with a device according to claim 8.

## Revendications

1. Procédé de détermination de l'hémolyse d'un échantillon sanguin, dans lequel une mesure pour la progression de l'hémolyse est calculée, dans lequel le procédé présente les étapes suivantes :
- irradiation de lumière de mesure qui est fournie par une source de lumière de mesure (3), sur l'échantillon sanguin lors de l'hémolyse,
- détection de valeurs de lumière de mesure en plusieurs temps de mesure pour de la lumière de mesure transmise à travers l'échantillon sanguin et/ou réfléchie par l'échantillon sanguin avec un dispositif de détecteur (4), et
- comparaison de plusieurs des valeurs de lumière de mesure pour différents temps de mesure et calcul d'une mesure pour la progression de l'hémolyse, en ce qu'à partir des valeurs de lumière de mesure détectées, un tracé en fonction du temps est formé pour les valeurs de lumière de mesure et pour le tracé en fonction du temps, une hausse d'une courbe de mesure correspondante est calculée au moins par tronçons en tant que mesure de comparaison pour la comparaison des valeurs de lumière de mesure aux différents temps de mesure,
**caractérisé par**
- l'exécution de la comparaison des valeurs de lumière de mesure et du calcul d'une mesure pour la progression de l'hémolyse au moyen d'un dispositif d'évaluation (5) et
- la constatation de la fin de l'hémolyse lorsque la hausse dans le cadre d'une précision de mesure pouvant être sélectionnée descend d'un minimum à zéro après un temps de mesure dans lequel la hausse est différente de zéro.

2. Procédé selon la revendication 1, **caractérisé en ce que** la détection des valeurs de lumière de mesure est effectuée au moins partiellement durant le fonctionnement en hémolyse d'un dispositif d'hémolyse utilisé pour l'hémolyse de l'échantillon sanguin.

3. Procédé selon la revendication 1 ou 2, **caractérisé en ce que** la détection des valeurs de lumière de mesure est effectuée au moins partiellement durant une pause de fonctionnement du dispositif d'hémolyse utilisé pour l'hémolyse de l'échantillon sanguin.

4. Procédé selon au moins l'une des revendications précédentes, **caractérisé en ce que** la détection des valeurs de lumière de mesure est effectuée au moins partiellement durant l'action d'un ou plusieurs réactif(s) favorisant l'hémolyse de l'échantillon sanguin.

5. Procédé selon au moins l'une des revendications précédentes, **caractérisé en ce que** la détection des valeurs de lumière de mesure est effectuée au moins partiellement pendant un intervalle de temps dans lequel l'échantillon sanguin est exempt de l'action d'un ou plusieurs réactif(s) favorisant l'hémolyse de l'échantillon sanguin.

6. Procédé selon au moins l'une des revendications précédentes, **caractérisé en ce que** des valeurs de mesure d'intensité pour la lumière de mesure sont détectées en tant que valeurs de lumière de mesure.

7. Procédé selon au moins l'une des revendications précédentes, **caractérisé en ce qu'**après la constatation de la fin de l'hémolyse, des valeurs d'hémoglobine de l'échantillon sanguin sont déterminées au moyen d'un procédé de mesure optique.

8. Procédé de détermination de l'hémolyse d'un échantillon sanguin qui est configuré pour calculer une mesure de la progression de l'hémolyse, comprenant :
- une source de lumière de mesure (3) qui est configurée pour irradier de la lumière de mesure sur l'échantillon sanguin lors de l'hémolyse, et
- un dispositif de détecteur (4) qui est configuré pour détecter des valeurs de lumière de mesure à plusieurs temps de mesure pour de la lumière de mesure transmise à travers l'échantillon sanguin et/ou réfléchie par l'échantillon sanguin,
**caractérisé par** un dispositif d'évaluation (5) qui est configuré pour
- comparer plusieurs des valeurs de lumière de mesure pour différents temps de mesure et en calculer une mesure pour la progression de l'hémolyse, en ce qu'à partir des valeurs de lumière de mesure détectées, un tracé en fonction du temps est formé pour les valeurs de lumière de mesure et pour le tracé en fonction du temps, une hausse d'une courbe de mesure correspondante est calculée au moins par tronçons en tant que mesure de comparaison pour la comparaison des valeurs de lumière de mesure aux différents temps de mesure, et
- constater une fin de l'hémolyse lorsque la hausse dans le cadre d'une précision de mesure pouvant être sélectionnée descend d'un minimum à zéro après un temps de mesure dans lequel la hausse est différente de zéro.

9. Hémolyseur comprenant un dispositif selon la revendication 8.
